# EUROPEAN PATENT SPECIFICATION

(11) **EP 2 626 585 B1**
(45) Date of publication and mention of the grant of the patent: **10.12.2014**
(21) Application number: 12154431.6
(22) Date of filing: 08.02.2012
(51) Int. Cl.: F16D 55/2265, F16D 65/00

(54) **Guide pin**
Führungsstift
Tige de guidage

(43) Date of publication of application: 14.08.2013
(73) Proprietor: Meritor Heavy Vehicle Braking Systems (UK) Limited, Cwmbran, Gwent NP44 3XU (GB)
(72) Inventor: Thompson, Richard, Cwmbran, Gwent NP44 3XU (GB); Hayes, Paul, Cwmbran, Gwent NP44 3XU (GB); Williams, Neil, Cwmbran, Gwent NP44 3XU (GB); Roberts, Paul, Cwmbran, Gwent NP44 3XU (GB)
(74) Representative: Foot, Paul Matthew James

(56) References cited:
- EP-A1- 2 290 256
- WO-A1-2005/124179
- DE-A1-102008 044 060
- US-A- 4 480 724
- US-A- 4 630 713

## Description

### Field of Invention

The present invention relates to a guide pin for slidably mounting a caliper to a brake carrier of a disc brake, and a disc brake incorporating such a guide pin.

### Background

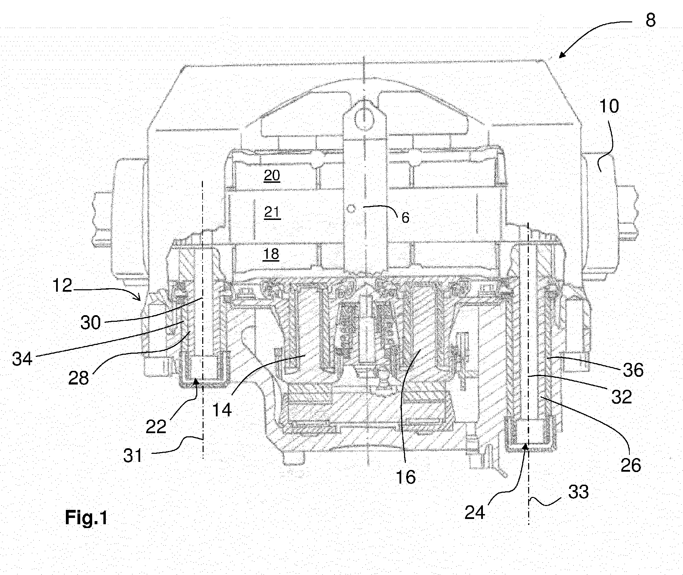

Pneumatic disc brakes are frequently used on heavy vehicles. One typical type of disc brake used is a reaction beam air disc brake, an example (among many) is the Meritor air disc brake D-ELSA 2 indicated generally at 8 in Figure 1. This air disc brake has a brake carrier 10 that carries an outboard brake pad 20 and an inboard brake pad 18. A brake disc 21 is positioned between the two brake pads 18 and 20. Two pistons 14 and 16 are positioned in a caliper 12 and are operable to push the inboard brake pad 18 towards the brake disc 21. The brake disc 21 is fixed in an inboard-outboard direction, such that movement along an axis 6 perpendicular to a principal plane of the brake disc is prevented. This arrangement is such that when the inboard brake pad is pushed towards and contacts the brake disc 21, further pushing of the inboard brake pad towards the brake disc causes the caliper to move inboard. As the caliper 12 moves inboard it moves the outboard brake pad 20 towards the brake disc 21 clamping the brake disc 21 between the outboard and the inboard pads 20 and 18 and thereby effecting braking by frictionally inhibiting rotation of the brake disc 21. The caliper 12 is able to slide because it is slidably mounted on two guide pins 22 and 24. One of the guide pins 22 is shorter than the other guide pin 24, in order to accommodate vehicle installation constraints, and is guided in an "oval" (non-round) bush so that the shorter guide pin can accommodate deflection of the disc brake during braking, whilst the longer guide pin provides a more positive location for the housing. Other types of pneumatic, hydraulic and mechanical disc brakes also have a brake carrier and a caliper, the caliper being slidably mounted on one or more guide pins.

The conventional guide pins 22 and 24 comprise a guide sleeve 28 and 26 and a bolt 30 and 32 respectively. The bolt is received in the sleeve and attaches the guide pin to the brake carrier 10. The inner surface of the sleeve is a close fit to the bolt, approximately 0.2 to 0.4 mm clearance radially. Two bores are formed in the caliper and bushes 34 and 36 are positioned in the bores. The bushes 34 and 36 receive the respective guide pin. This arrangement permits the caliper to slide on the guide pin, and as such brakes of this type are often described as "sliding caliper".

A concern with conventional guide pins is the amount of machining required to form the sleeve. A further concern is the amount of metal required by such sleeves, with the associated cost and weight implications.

US4630713 discloses a caliper mounting boss with a nylon guide sleeve lined with a rubber support bushing through which a caliper mounting bolt extends.

WO2005/124179 discloses a guide pin of a floating caliper disc brake formed of multiple parts with an elastic bushing surrounding the pin.

US4480724 discloses a caliper mounting boss with a nylon guide sleeve according to the preamble of claim 1.

### Summary of Invention

An aim of the present invention is to alleviate at least some of the problems associated with the guide pins of the prior art.

Accordingly, in a first aspect the present invention provides a guide pin for slidably mounting a caliper to a brake carrier of a disc brake, the guide pin having:
a fastener for connecting the guide pin to the brake carrier;
a hollow tube surrounding the fastener providing a surface along which the caliper can slide; and an elongate insert positioned in the hollow tube occupying a space between the hollow tube and the fastener wherein the elongate insert is abuttable against the hollow tube so as to maintain the fastener, hollow tube and elongate insert in substantially fixed relative positions when the fastener is tightened.

Advantageously the provision of an elongate insert means that the hollow tube can be formed to a near net shape, which reduces the amount of machining required and therefore the waste produced when manufacturing the guide pin, which in turn reduces the cost of manufacture. Provision of an insert also means that additional methods of manufacture are available for manufacture of the tube.

The following describes features that can be optionally combined with the features of the guide pin of the first aspect, either individually or where appropriate in combination.

Preferably, the elongate insert is deformable such that it is capable of dampening vibration. A problem with guide pins of the prior art is that when the guide pin or components of the guide pin wear, the guide pin contributes to rattle of the brake, which can be of concern to the user. The use of an elongate insert with damping properties alleviates this problem by reducing and dampening the noise due to rattling of the guide pin. Further advantageously, such a deformable elongate insert improves the robustness of the guide pin to vibration loading.

The elongate insert may be sufficiently deformable and arranged such that sufficient tightening of the fastener to a brake carrier deforms the elongate insert so that the elongate insert contacts the hollow tube. The force exerted by the deformation of the elongate insert on the hollow tube may be sufficient to maintain or partially maintain the elongate insert, the hollow tube and the fastener in fixed relative positions when the fastener is tightened. The elongate insert may alternatively or additionally be held to the hollow tube using either an interference fit between the elongate insert and the hollow tube or using an adhesive.

In the case of an elongate insert sufficiently deformable and arranged such that sufficient tightening of the fastener deforms the elongate insert so that the elongate insert contacts the hollow tube, the tightening load required to cause the elongate insert to deform may be a load equal to or greater than 100kN. Preferably, it may be a load equal to or greater than 150kN. More preferably, it may a load equal to or greater than 170kN.

The hollow tube may be of substantially constant cross section. Advantageously, a substantially constant cross section further reduces the amount of machining required to manufacture the guide pin and offers potential alternative manufacturing methods.

A collar can be positioned at an end of the hollow tube remote from a head of the fastener to contact the brake carrier. The collar may be positionable within a space defined by the hollow tube. The collar may have a flange, and the flange may be positionable axially between the hollow tube and the brake carrier. The collar may be made from mild steel, or stainless steel. The collar may be provided with a protective finish, for example a corrosion resistant coating.

In some embodiments, a washer may be positionable between a head of the fastener and the elongate insert. The washer may be made from mild steel.

Preferably the fastener is a bolt. In some embodiments, the fastener may be a flange-head bolt.

Preferably, the elongate insert is made of plastics. Advantageously, manufacturing the elongate insert from a material such as plastic reduces the overall weight of the guide pin compared to comparably sized guide pins of the prior art. This is particularly important for guide pins that are used on disc brakes of heavy vehicles where weight reduction of the vehicle can be advantageous in improving fuel economy and reducing carbon dioxide (CO₂) emissions.

The elongate insert may be made from polyhexamethylene adipamide, commonly known as Nylon 66.

An outer surface of the hollow tube may have a PTFE (polytetrafluoroethylene) coating.

The cross section of the hollow tube may be non-circular, preferably oval. Alternatively, the cross section of the hollow tube may be circular.

In a third aspect, the present invention provides a disc brake having a brake carrier and a guide pin according to the first or the second aspect.

The fastener may be screwed into the brake carrier so as to compress the elongate insert such that the fastener, hollow tube, and insert are maintained in substantially fixed relative positions.

The disc brake may have two guide pins, one of which is shorter than the other. The shorter guide pin may have an oval cross section and the longer guide pin may have a circular cross section.

The disc brake may further comprise a caliper slidably mounted to the brake carrier by one or more guide pins.

A vehicle may have the guide pin according to the first or the second aspect.

### Description of drawings

Embodiments of the present invention will now be described, by example only, with reference to the accompanying drawings in which:
Figure 1 shows schematically a partial cross section of an air disc brake of the prior art;
Figure 2 shows schematically a cross section of a guide pin of a first embodiment of the present invention;
Figure 3 shows schematically a cross section of an example guide pin; and
Figure 4 shows schematically a vehicle having a guide pin of Figure 2 or Figure 3.

### Detailed description

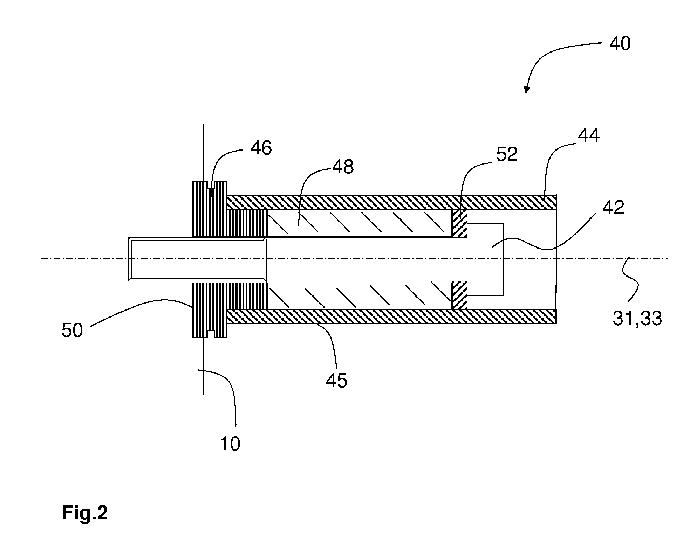

Referring to Figure 2 a guide pin for slidably mounting a caliper to a brake carrier is indicated generally at 40. The guide pin can be used on a disc brake, such as the one shown in Figure 1, replacing the conventional guide pins. The guide pin 40 has a fastener 42 for connecting the guide pin 40 to the brake carrier 10. In this example, the fastener 42 is a M18 x 1.5 bolt. The fastener 42 affixes to brake carrier 10 by screwing part way into the brake carrier 10 such that the end of the fastener 42 opposite the screwed portion protrudes from the brake carrier 10 along an axis 31 or 33 parallel to the axis 6 of the disc brake 8, such as the disc brake shown in Figure 1, i.e. perpendicular to a plane of the brake carrier 10.

Surrounding the fastener 42 is a hollow tube 44. In this embodiment, the hollow tube 44 is an elongate thin walled tube made from either mild steel (e.g. with a suitable anti-corrosion treatment such as a galvanised coating) or stainless steel. The hollow tube 44 may have a PTFE coating on its outer surface 45. The hollow tube 44 of the present embodiment has a substantially constant circular cross section. In this embodiment, the hollow tube 44 extends in the axial direction of the fastener 42 and extends past the head of the fastener 42, such that the head of the fastener is axially within the end of the hollow tube 44. However, in alternative embodiments, the head of the fastener 42 may be flush with the end of the hollow tube 44 or may protrude from the hollow tube 44. In a further alternative, the cross section of the hollow tube 44 is oval, or any other suitable shape. In further alternative embodiments the cross section of the hollow tube may not be constant, for example it may have a step on the inner or outer surface of the hollow tube 44.

Positioned at the end of the hollow tube 44, remote from the head of the fastener 42, is a collar 46, which in this example is made from mild steel. A recess 50 is formed in the brake carrier 10 and this recess provides a seat for the collar 46. The collar 46 is annular and has a body and a flange. The body of the collar 46 fits within a radial space formed between the fastener 42 and the hollow tube 44, and the flange of the collar 46 extends over the end of the hollow tube 44 so as to be positioned axially between the brake carrier and the hollow tube. The collar 46 substantially seals the hollow tube 44 and improves the positional fit between the brake carrier 10 and the guide pin 40. The collar 46 also performs the function of locating the fastener 42, in this example concentrically, in the hollow tube 44 and against the brake carrier 10. In alternative embodiments, the collar 46 may not have a flange, and/or the brake carrier 10 may not have a recess 50 to provide a seat for the collar 46. In a further alternative, the collar 46 may be positioned external to the hollow tube 44 so that the collar 46 surrounds the outer side 45 of the hollow tube 44 at one end of the hollow tube 44.

A washer 52 is positioned at an end of the fastener remote from the collar 46. The washer 52 is concentrically aligned with the fastener 42 and the hollow tube 42, and the washer 52 contacts a head of the fastener 42. The washer 52 is made from mild steel in this embodiment. In alternative embodiments, the use of the washer may not be required, and in such examples the fastener 42 may be a flange head bolt.

An elongate insert 48 is positioned axially between the collar 46 and the washer 52. In this embodiment, the elongate insert 48 abuts the collar 46 and the washer 52, and surrounds the fastener 42. In other embodiments the elongate insert 48 may not fully surround the fastener 42 and/or may be provided with perforations, ridges or other formations. In this example, the elongate insert 48 is made from plastic, a suitable plastic being polyhexamethylene adipamide, commonly known as Nylon 66. The elongate insert 48 is annular and the fit between the elongate insert 48 and the hollow tube 44 is a clearance fit and the extent of the clearance depends on the plastic used for the elongate insert 48, the dimensions of the hollow tube 44 and the dimensions of the elongate insert 48.

In this embodiment, the dimensions of the elongate insert 48 should be such that the elongate insert 48 can be compressed in an axial direction, and a compression load caused by the tightening of the fastener 42 causes the elongate insert 48 to deform so as to contact the inner surface of the hollow tube 44, and hold the hollow tube 44 to the elongate insert 48. In alternative embodiments, the deformation of the elongate insert 48 may not cause or wholly cause the hollow tube 44 to be attached to the elongate insert 48, and instead or in addition an interference fit or an adhesive between the elongate insert 48 and the hollow tube 44 may be used.

To connect the guide pin 40 to the brake carrier 10, the guide pin 40 is firstly assembled. In one method of assembly of the guide pin, the hollow tube 44 is placed over the collar 46 such that the body of the collar 46 is positioned within the hollow tube 44 and the flange of the collar 46 extends over an end of the hollow tube 44. The elongate insert 48 is then inserted into the hollow tube 44. Washer 52 is then placed on the elongate insert 48 and the fastener 42 is positioned in a receiving hole formed by the collar 46, elongate insert 48 and hollow tube 44. It will be appreciated that there are other ways in which assembly can be achieved.

The fastener 42 is then screwed into a receiving hole in the brake carrier 10. As the fastener is screwed into the receiving hole, tightening of the fastener 42 applies a compressive load to the elongate insert 48 in an axial direction of the elongate insert 48. In this example the compressive load applied once the fastener 42 is screwed to its limit in the brake carrier 10 is approximately 170 kN, which is the current pre-load used for guide pins 40 of the prior art of a comparable size. At such a compressive load, the elongate insert 48 reduces in axial length but expands in a radial direction, such that the volume of the deformed elongate insert 48 is substantially similar to the volume of the undeformed elongate insert 48. The increase in radial width of the deformed elongate insert 48 causes the elongate insert 48 to push against the inner wall of the hollow tube 44, the elongate insert 48 exerting a sufficient force on the hollow tube 44 to maintain the hollow tube 44 in position.

In use, once the guide pin 40 is attached to the brake carrier 10, a caliper 12 will be mounted on the guide pin 40. The caliper 12 is mounted on the guide pin 40 by positioning one or more bushes 34, 36 into a bore in the caliper 12. These bushes may be steel, bronze, plastic or rubber bushes, or a composite of any of these. The guide pin 40 is greased, and the caliper 12 is slid onto the guide pin 40. In the case of a disc brake 8 having two guide pins 40, for example the Meritor Air Disc Brake D-ELSA 2, ELSA 225 H, ELSA 195 C or ELSA 175 S, one of the guide pins 40 may be shorter than the other guide pin. The shorter guide pin in some cases may be guided in an "oval" (non-round) bush, or have an oval cross section so as to accommodate brake deflection during braking. One bush may be positioned in the receiving hole that receives the shorter guide pin, and two bushes may be positioned in the receiving hole that receives the longer guide pin. Both of the pins may be pins according to the present invention, or one of the pins may be a conventional pin and the other pin may be a pin according to the present invention.

Advantageously, the multi-part construction of the guide pin 40 means that the component parts can be manufactured to a net or near net shape which means there is little machining required and therefore little material wastage. In addition, the use of a plastic elongate insert 48 permits a material of lower density than the hollow tube 44 to be used, in this example Nylon 66, which reduces the weight of the guide pin 40 compared to the guide pins of the prior art. The use of Nylon 66, or another suitable plastic or material has the advantage of exhibiting damping properties which results in reduced rattling when the or components of the guide pin wear, and the construction of the guide pin may be more robust to vibration loading.

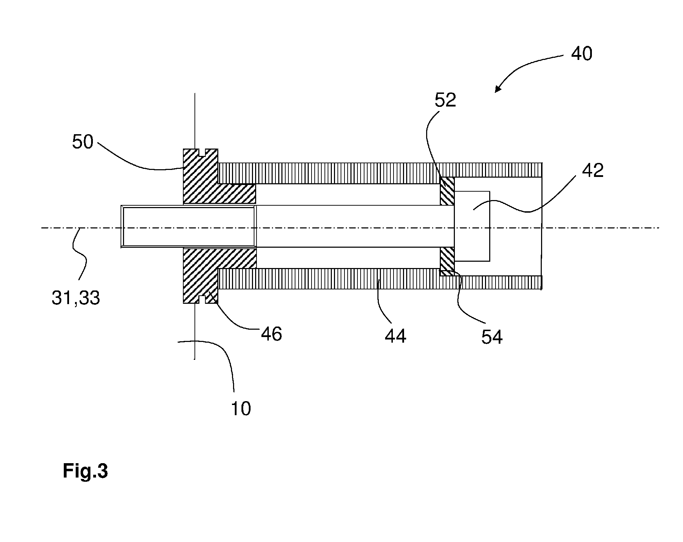

An alternative embodiment to the one described above is shown in Figure 3. This embodiment is similar to the one described above except it does not have an elongate insert 48. Instead, a step 54 is formed in the inner surface of the hollow tube 44. A connector, in this example a washer 52 is positioned between the head of the fastener 42 and the step 54, so as to provide a surface that the head of the fastener 42 can abut when the fastener 42 is tightened. In a further alternative, a recess may be formed in the hollow tube 44 into which the washer 52 can snap-fit, instead of a step. Further alternatively, no step 54 or recess may be formed in the hollow tube 44 and the washer 52 may abut the end of the hollow tube 44. Instead of a washer 52 the fastener may be a flange head bolt and the flange of the flange head bolt may contact the hollow tube. In other embodiments, the connector may be any suitable connector.

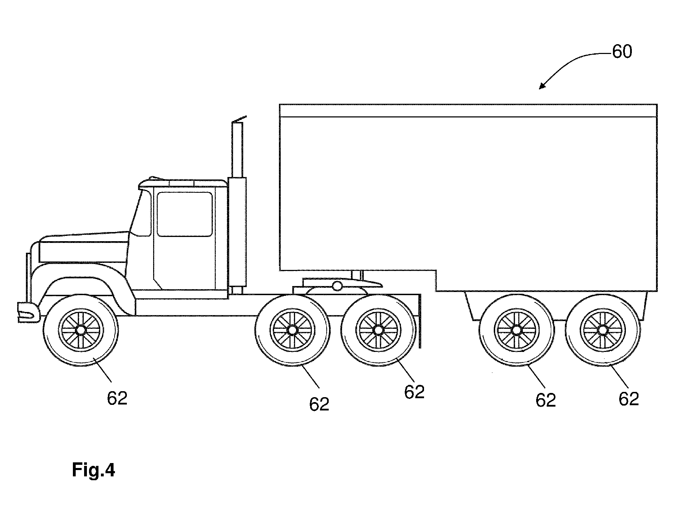

Referring to Figure 4, a disc brake 8 having a guide pin 40 according to the present invention may be used on a vehicle 60 to brake one or more of wheels 62.

Advantageously, this embodiment provides a guide pin of reduced weight compared to a comparably sized conventional guide pin. This embodiment also permits component parts of the guide pin to be made to net or near net shape, which reduces the amount of machining required and therefore the material wastage, cost and time to manufacture.

## Claims

1. A guide pin (40) for slidably mounting a caliper to a brake carrier (10) of a disc brake (8),
the guide pin having:
a fastener (42) for connecting the guide pin to the brake carrier;
a hollow tube (44) for surrounding the fastener to provide a surface along which the caliper can slide; and
an elongate insert (48) positionable in the hollow tube occupying a space between the hollow tube and the fastener, **characterised in that** the elongate insert (48) is abuttable against the hollow tube so as to maintain the fastener, hollow tube and elongate insert in substantially fixed relative positions when the fastener is tightened.

2. The guide pin according to claim 1, wherein the elongate insert (48) is deformable such that it is capable of dampening vibration.

3. The guide pin according to claim 2, wherein the elongate insert (48) is sufficiently deformable and arranged such that sufficient tightening of the fastener (42) to a brake carrier (10) deforms the elongate insert so that the elongate insert contacts the hollow tube (44) and may at least partially maintain the fastener, hollow tube and elongate insert in substantially fixed relative positions.

4. The guide pin according to claim 3, wherein the fastener (42) tightening load required to cause the elongate insert to deform and thereby maintain the hollow tube in a substantially fixed position thereto is a load equal to or greater than 100kN.

5. The guide pin according to anyone of the previous claims, where the hollow tube 44) is of substantially constant cross section.

6. The guide pin according to any one of the previous claims further comprising a washer (52) positionable between a head of the fastener and the elongate insert.

7. The guide pin according to any one of claims 1 to 4, wherein the fastener (42) is a flange-head bolt.

8. The guide pin according to any one of the previous claims, wherein the elongate insert is made of plastic.

## Patentansprüche

1. Führungsstift (40) zum verschiebbaren Anbringen eines Sattels an einem Bremsträger (10) einer Scheibenbremse (8),
wobei der Führungsstift Folgendes aufweist:
ein Befestigungselement (42) zur Verbindung des Führungsstifts mit dem Bremsträger;
ein Hohlrohr (44) zum Umgeben des Befestigungselements zur Bereitstellung einer Fläche, entlang der der Sattel gleiten kann; und
einen länglichen Einsatz (48), der im Hohlrohr positionierbar ist und einen Raum zwischen dem Hohlrohr und dem Befestigungselement einnimmt, **dadurch gekennzeichnet, dass** der längliche Einsatz (48) an das Hohlrohr anstoßen kann, um das Befestigungselement, das Hohlrohr und den länglichen Einsatz in im Wesentlichen festgelegten relativen Positionen zu halten, wenn das Befestigungselement festgezogen wird.

2. Führungsstift nach Anspruch 1, wobei der längliche Einsatz (48) so verformbar ist, dass er in der Lage ist, Schwingungen zu dämpfen.

3. Führungsstift nach Anspruch 2, wobei der längliche Einsatz (48) ausreichend verformbar und so angeordnet ist, dass ausreichendes Anziehen des Befestigungselements (42) an einen Bremsträger (10) den länglichen Einsatz so verformt, dass der längliche Einsatz das Hohlrohr (44) berührt, und das Befestigungselement, das Hohlrohr und den länglichen Einsatz zumindest teilweise in im Wesentlichen festgelegten relativen Positionen halten kann.

4. Führungsstift nach Anspruch 3, wobei das Anzugsmoment des Befestigungselements (42), das dazu erforderlich ist, zu bewirken, dass sich der längliche Einsatz verformt, und dadurch das Hohlrohr in einer im Wesentlichen festgelegten Position ihm gegenüber zu halten, eine Kraft größer gleich 100 kN ist.

5. Führungsstift nach einem der vorhergehenden Ansprüche, wobei das Hohlrohr (44) einen im Wesentlichen konstanten Querschnitt aufweist.

6. Führungsstift nach einem der vorhergehenden Ansprüche, ferner umfassend eine Unterlegscheibe (52), die zwischen einem Kopf des Befestigungselements und dem länglichen Einsatz positioniert werden kann.

7. Führungsstift nach einem der Ansprüche 1 bis 4, wobei das Befestigungselement (42) eine Flanschkopfschraube ist.

8. Führungsstift nach einem der vorhergehenden Ansprüche, wobei der längliche Einsatz aus Kunststoff hergestellt ist.

## Revendications

1. Tige de guidage (40) pour monter à coulissement un étrier sur un support de frein (10) d'un frein à disque (8),
la tige de guidage présentant :
un élément de fixation (42) destiné à relier la tige de guidage au support de frein ;
un tube creux (44) destiné à entourer l'élément de fixation pour produire une surface le long de laquelle l'étrier peut coulisser ; et
un insert allongé (48) pouvant être positionné dans le tube creux, occupant un espace entre le tube creux et l'élément de fixation, **caractérisée en ce que** l'insert allongé (48) peut être mis en butée contre le tube creux de manière à maintenir l'élément de fixation, le tube creux et l'insert allongé dans des positions relatives sensiblement fixes lorsque l'élément de fixation est serré.

2. Tige de guidage selon la revendication 1, dans laquelle l'insert allongé (48) peut être déformé de telle sorte qu'il soit susceptible d'amortir des vibrations.

3. Tige de guidage selon la revendication 2, dans laquelle l'insert allongé (48) peut être déformé suffisamment et est agencé de telle sorte qu'un serrage suffisant de l'élément de fixation (42) sur un support de frein (10) déforme l'insert allongé de telle sorte que l'insert allongé soit en contact avec le tube creux (44) et puisse au moins partiellement maintenir l'élément de fixation, le tube creux et l'insert allongé dans des positions relatives sensiblement fixes.

4. Tige de guidage selon la revendication 3, dans laquelle l'effort de serrage de l'élément de fixation (42) requis pour provoquer la déformation de l'insert allongé et maintenir ainsi le tube creux dans une position sensiblement fixe par rapport à celui-ci est un effort supérieur ou égal à 100 kN.

5. Tige de guidage selon l'une quelconque des revendications précédentes, dans laquelle le tube creux (44) est de section transversale sensiblement constante.

6. Tige de guidage selon l'une quelconque des revendications précédentes, comprenant en outre une rondelle (52) pouvant être positionnée entre une tête de l'élément de fixation et l'insert allongé.

7. Tige de guidage selon l'une quelconque des revendications 1 à 4, dans laquelle l'élément de fixation (42) est un boulon à tête à collerette.

8. Tige de guidage selon l'une quelconque des revendications précédentes, dans laquelle l'insert allongé est constitué de plastique.
